(19) Europäisches Patentamt
European Patent Office
Office européen des brevets

(11) Veröffentlichungsnummer: **0 093 311**
**A2**

# (12) EUROPÄISCHE PATENTANMELDUNG

(21) Anmeldenummer: 83103769.2

(22) Anmeldetag: 19.04.83

(51) Int. Cl.³: G 03 C 5/54
//G09B29/00

(30) Priorität: 28.04.82 DE 3215834

(43) Veröffentlichungstag der Anmeldung:
09.11.83 Patentblatt 83/45

(84) Benannte Vertragsstaaten:
BE DE FR GB

(71) Anmelder: AGFA-GEVAERT Aktiengesellschaft
D-5090 Leverkusen 1(DE)

(72) Erfinder: Credner, Hans-Heinrich, Dr.
Steinberg 7
D-8021 Hohenschäftlarn(DE)

## (54) Fotografisches Aufzeichnungsmaterial für Diffusionsverfahren und hierfür geeignete neue nichtdiffundierende Sulfiliminverbindungen.

(57) Sulfiliminverbindungen der Formel I

$$R^1-\overset{R^2}{\underset{O\ \ O}{S}}-N-A-X \qquad I$$

worin X ein integrierender Rest einer fotografisch aktiven Verbindung und A ein aus einem Benzolring mit mindestens zwei elektronenanziehenden Gruppen bestehendes Bindeglied ist, sind nützliche Verbindungen für fotografische Aufzeichnungsmaterialien. Die Verbindungen sind reduktiv spaltbar und setzen dabei den Rest -A-X mit einer $NH_2$-Gruppe frei. Falls X der integrierende Rest eines Farbstoffes ist, handelt es sich um Farbabspalter für Farbdiffusionsübertragungsverfahren.

EP 0 093 311 A2

Croydon Printing Company Ltd.

AGFA-GEVAERT
Aktiengesellschaft
Patentabteilung

D 5090 Leverkusen 1
Hs/ABc

# Fotografisches Aufzeichnungsmaterial für Diffusionsverfahren und hierfür geeignete neue nichtdiffundierende Sulfiliminverbindungen

Die vorliegende Erfindung betrifft ein fotografisches Aufzeichnungsmaterial mit mindestens einer Silberhalogenidemulsionsschicht, das mindestens eine nichtdiffundierende Verbindung enthält, die aufgrund einer Reduktionsreaktion eine diffusionsfähige fotografische wirksame Verbindung in Freiheit setzt, insbesondere einen diffusionsfähigen Farbstoff für Farbdiffusionsübertragungsverfahren. Bei den nichtdiffundierenden Verbindungen der vorliegenden Erfindung handelt es sich um neue Sulfiliminverbindungen.

Zur Durchführung des Farbdiffusionsübertragungsverfahrens wird üblicherweise ein lichtempfindliches Element verwendet, das farbgebende Verbindungen enthält, und ein Bildempfangselement, in dem durch bildmäßig übertragene diffusionsfähige Farbstoffe das gewünschte Farbbild erzeugt wird. Hierzu ist es erforderlich, daß zwischen dem lichtempfindlichen Element und dem Bildempfangselement mindestens während eines endlichen Zeitraumes innerhalb

der Entwicklungszeit ein fester Kontakt besteht, so daß die in dem lichtempfindlichen Element als Folge der Entwicklung erzeugte bildmäßige Verteilung an diffusionsfähigen Farbstoffen auf das Bildempfangselement übertragen werden kann. Der Kontakt kann hergestellt werden, nachdem die Entwicklung in Gang gesetzt worden ist, oder er kann bereits hergestellt worden sein, bevor die Entwicklung beginnt. Letzteres ist beispielsweise der Fall, falls ein Aufzeichnungsmaterial verwendet wird, in dem das lichtempfindliche Element und das Bildempfangselement eine integrale Einheit bilden. Es sind Ausführungsformen des Farbdiffusionsübertragungsverfahrens bekannt, bei denen eine derartige integrale Einheit auch nach Beendigung des Entwicklungsvorganges weiter bestehen bleibt; d.h., eine Abtrennung des lichtempfindlichen Elements vom Bildempfangselement ist auch nach erfolgtem Farbübertrag nicht vorgesehen. Es kann aber auch gemäß einer anderen Ausführungsform das Bildempfangselement, das nach dem Farbübertrag das fertige Bild trägt, von dem lichtempfindlichen Element, z.B. mittels einer zwischen beiden Elementen angeordneten Abziehschicht, abgetrennt werden. Ein fotografisches Aufzeichnungsmaterial im Sinne der vorliegenden Erfindung ist ein auf einem transparenten oder opaken Schichtträger angeordnetes lichtempfindliches Element mit mindestens einer Silberhalogenidemulsionsschicht und einer dieser zugeordneten farbgebenden Verbindung. Das fotografische Aufzeichnungsmaterial kann des weiteren ein Bildempfangselement in Form einer mit dem lichtempfindlichen Element in flächigem Kontakt befindlichen anfärbbaren Schicht enthalten.

Unter den bisher bekannt gewordenen Verfahren zur Herstellung farbiger Bilder nach dem Farbdiffusionsübertragungsverfahren gewinnen in jüngster Zeit zunehmend solche an Bedeutung, die auf der Verwendung diffusionsfest eingelagerter farbgebender Verbindungen beruhen, aus denen bei der Entwicklung diffusionsfähige Farbstoffe oder Farbstoffvorprodukte bildmäßig freigesetzt und auf eine Bildempfangsschicht übertragen werden. Solche farbgebende Verbindungen werden nachfolgend als Farbabspalter bezeichnet.

Zu den hierfür geeigneten Farbabspaltern sind beispielsweise die in DE-C 1 095 115 beschriebenen nichtdiffundierenden Farbkuppler zu zählen, die bei der Entwicklung als Folge einer Reaktion mit dem Oxidationsprodukt einer aus einem primären aromatischen Amin bestehenden Farbentwicklerverbindung einen vorgebildeten oder bei der Farbkupplung erzeugten Farbstoff in diffusionsfähiger Form in Freiheit setzen. Die Auswahl der benötigten Entwicklerverbindung beschränkt sich hierbei naturgemäß auf Farbentwickler.

Weiterhin ist hierbei auf die in DE-A 1 930 215 beschriebenen Farbabspalter hinzuweisen, die über eine spaltbare Hydrazongruppierung einen vorgebildeten latent diffusionsfähigen Farbstoffrest mit einem diffusionsfest machenden Rest verknüpft enthalten. Diese Verbindungen sind nicht als Farbkuppler zu bezeichnen, und es hat sich auch erwiesen, daß die Auswahl der Entwicklerverbindungen, die zur Freisetzung des diffusionsfähigen

Farbstoffes erforderlich sind, keineswegs auf die üblichen Farbentwickler beschränkt ist, sondern daß auch Schwarz-Weißentwickler z.B. Brenzkatechine sehr gut brauchbar sind.

In DE-A 1 772 929 sind ferner nichtdiffundierende farbige Verbindungen mit einer besonderen Gruppierung beschrieben, die bei der Entwicklung eine oxidative Ringschlußreaktion eingegeben und hierbei einen vorgebildeten Farbstoffrest in diffusionsfähiger Form in Freiheit setzen. Die dort vorgestellten Verbindungen lassen sich in zwei Gruppen einteilen. Die Verbindungen der einen Gruppe benötigen zur Entwicklung eine übliche Farbentwicklerverbindung, mit deren Oxidationsprodukt sie kuppeln und in einer nachfolgenden Ringschlußreaktion den vorgebildeten Farbstoffrest in Freiheit setzen. Die Verbindungen der anderen Gruppe stellen selbst Silberhalogenidentwicklungsmittel dar und vermögen daher auch in Abwesenheit weiterer Entwicklerverbindungen in der oxidierten Form die vorerwähnte Ringschlußreaktion unter Freisetzung der diffusionsfähigen Farbstoffe einzugehen.

Schließlich seien an dieser Stelle noch erwähnt die Farbabspalter der DE-A 22 42 762. Hierbei handelt es sich um Sulfonamidophenole und Sulfonamidoaniline, die nach der bei der Entwicklung erfolgten Oxidation unter dem Einfluß des Entwickleralkalis unter Freisetzung diffusionsfähiger Farbstoffe gespalten werden.

Die erwähnten Farbabspalter arbeiten ausnahmslos negativ, d.h. die bildmäßige Verteilung des freigesetzten diffusionsfähigen Farbstoffes entsteht bei Verwendung üblicher (negativ arbeitender) Silberhalogenidemulsionen in Übereinstimmung mit dem bei der Entwicklung erzeugten negativen Silberbild. Zur Erzeugung positiver Farbbilder bedarf es daher der Verwendung direktpositiver Silberhalogenidemulsionen oder andernfalls der Anwendung eines geeigneten Umkehrverfahrens.

Positive Farbbilder können aber auch unter Verwendung negativer Silberhalogenidemulsionen hergestellt werden, wenn positiv arbeitende Farbabspalter eingesetzt werden, d.h. Farbabspalter, die den Farbstoff hauptsächlich an den Stellen freisetzen, in denen bei der Entwicklung wenig Entwickleroxidationsprodukt gebildet wird. Verbindungen dieser Art verfügen in der Regel über eine redoxaktive Gruppe, die in reduziertem Zustand unter den Bedingungen der fotografischen Entwicklung einer Spaltung unterliegt, wobei eine fotografisch wirksame Gruppe, insbesondere ein Farbstoff oder Farbstoffvorprodukt in diffusionsfähiger Form in Freiheit gesetzt wird. Je nach dem, ob der Farbbilderzeugungsmechanismus durch bildmäßig erzeugte Entwickleroxidationsprodukte oder durch in bildmäßiger Verteilung vorliegende Reduktionsmittel eingeleitet wird, unterscheidet man bei Farbabspaltern den zuletzt genannten Art zwischen oxidierbaren Verbindungen und reduzierbaren Verbindungen.

Oxidierbare Farbabspalter, die im nicht oxidierten Zustand unter den Bedingungen der fotografischen Entwicklung einen diffusionsfähigen Farbstoff freisetzen, sind beispielsweise beschrieben in DE- A 24 02 900, DE-A 25 43 902, DE-A 28 23 159 und DE-A 28 54 946.

Ein anderes Farbstoff lieferndes System, das ebenfalls zu einer Umkehrung des Bildes führt und damit ebenfalls mit negativen Silberhalogenidemulsionen kombiniert werden kann, umfaßt reduzierbare Farbabspalter. Diese reagieren weder direkt noch indirekt mit oxidierenden Substanzen, z.B. dem Oxidationsprodukt des Entwicklers, so daß an den belichteten Stellen im wesentlichen kein Farbstoff freigesetzt wird. Sie sind jedoch reaktionsfähig gegenüber reduzierenden Verbindungen, z.B. durch direkte oder vorzugsweise indirekte Reaktion mit unverbrauchtem fotografischen Entwickler, der hauptsächlich an den unbelichteten Stellen verfügbar ist. Diese reduzierbaren Farbabspalter werden als Folge der Reduktion so gespalten, daß diffusionsfähige, fotografische wirksame Verbindungen, insbesondere Farbstoffe oder Farbstoffvorprodukte liefernde Verbindungen, an den unbelichteten Stellen freigesetzt werden, die dann in die Bildempfangsschicht diffundieren und dort festgelegt werden. Beispiele von reduzierbaren Farbabspaltern sind in DE-A 28 09 716, EP-A 0 004 399, GB-A 80 12 242, EP-A 0 035 685 und DE-A 30 15 669 beschrieben.

In einer besonders bevorzugten Ausführungsform werden die zuletzt genannten reduzierbaren Farbabspalter in Kombination mit einer Elektronendonorverbindung (ED-Verbindung) oder Elektronendonor-Vorläuferverbindung (ED-Vorläuferverbindung), die die für die Farbstoff freisetzende Reaktion erforderlichen Elektronen liefert, eingesetzt. Liegt also in dem fotografischen Aufzeichnungsmaterial, das die nichtdiffundierenden reduzierbaren

Farbabspalter enthält, eine ED-Verbindung oder ED-Vorläuferverbindung in bildmäßiger Verteilung vor, so werden durch die Reaktion der ED-Verbindung mit dem reduzierbaren Farbabspalter diffusionsfähige fotografisch wirksame Verbindungen, bzw. Farbstoffvorprodukte, in bildmäßiger Verteilung freigesetzt.

Die reduzierbaren Farbabspalter bieten gegenüber den oxidierbaren Farbabspalter verschiedene Vorteile, die insbesondere darin liegen, daß die Freisetzung der diffusionsfähigen fotografisch wirksamen Verbindungen besser gesteuert werden kann und dadurch sowohl die Farbtrennung verbessert als auch die Entstehung eines unerwünschten Farbschleiers unterdrückt werden kann. Trotzdem ist es wünschenswert, die Eigenschaften von derartigen in Kombination mit negativen Silberhalogenidemulsionen positiv arbeitenden Farbstoff liefernden Systemen weiter zu verbessern. Berücksichtigt man, daß der Entstehung des diffusionsfähigen Farbstoffes mehrere chemische Reaktionen vorausgehen müssen, nämlich mindestens die fotografische Entwicklungsreaktion und die Reaktion des fotografischen Entwicklers über die ED-Verbindungen bzw. ED-Vorläuferverbindungen mit dem diffusionsfest eingelagerten Farbabspalter, wobei diese Reaktionen zum Teil einen relativ komplizierten Verlauf haben und außerdem die verschiedenen Reaktionen zeitlich streng nacheinander ablaufen müssen, um die Entstehung von diffusionsfähigem Farbstoff an unerwünschten Stellen zu vermeiden, so wird klar, daß viele Freiheitsgrade, insbesondere bei der Auswahl der verschiedenen Reaktionskomponenten, erforderlich sind.

Eine weitere Schwierigkeit besteht darin, daß die im Rahmen der geschilderten Reaktionsabläufe erforderlichen Verbindungen in möglichst einfacher Weise in fotografische Schichten einlagerbar sein müssen, um die Herstellung der fotografischen Aufzeichnungsmaterialien nicht zu erschweren. Darüber hinaus besteht natürlich die Forderung nach einer ausreichenden Stabilität der für den Reaktionsablauf erforderlichen Verbindungen und insbesondere die Forderung einer möglichst hohen Lichtstabilität der freigesetzten Farbstoffe.

Da die an dem geschilderten Reaktionsablauf beteiligten Verbindungen zum Teil eine relativ komplizierte chemische Struktur haben, ist es ferner wünschenswert, die bestehenden Systeme weiter zu verbessern und zu ersetzen durch andere, die herstellungsmäßig leichter zugänglich sind.

Die in EP-A 0 035 685 beschriebenen farbgebenden Verbindungen lassen sich charakterisieren als reduzierbare Farbabspalter, die unter den Bedingungen der fotografischen Entwicklung durch Reduktion gespalten werden unter Freisetzung diffusionsfähiger fotografisch wirksamer Verbindungen, insbesondere von Farbstoffen oder Farbstoffvorprodukten. Dieser Spaltungsmechanismus wird durch die Bezeichnung "SR-Verbindung" (Spaltung durch Reduktion) bzw. "CR-Verbindung" (cleavage by reduction) zum Ausdruck gebracht. Chemisch sind die Verbindungen der EP-A 0 035 685 der Klasse der Sulfilimine zuzurechnen. Von den zuvor erwähnten reduzierbaren Farbabspaltern anderer Reaktionsweisen unterscheiden sich die SR-Verbindungen wie folgt. Erstere müssen erst reduziert werden und unterliegen dann einer durch Basen induzierten Spaltung. Die dadurch bedingte Abhängigkeit vom pH-Wert kann zu Nachteilen führen. Die erfindungsgemäßen SR-Verbindungen besitzen hiergegen den Vorteil, daß die Spaltung schon durch die Reaktion mit den ED-Verbindungen erfolgt und eine nachfolgende Hydrolyse entfällt. Obwohl die SR-Verbindungen der EP-A 0 035 685 die an sie gerichteten Forderungen bereits weitgehend erfüllen, besteht ein gewisser Nachteil noch darin, daß die reduktive Spaltung unter den Bedingungen der fotografischen Entwicklung noch nicht rasch genug verläuft bzw. eine vergleichsweise hohe Konzentration an ED-Verbindungen erfordert.

Der Erfindung liegt die Aufgabe zugrunde, neue reduktiv spaltbare Verbindungen aufzufinden und Aufzeichnungsmaterialien anzugeben, die solche neuen reduktiv spaltbaren Verbindungen enthalten. Die neuen Verbindungen sollen über eine Ballastgruppe verfügen und daher in fotografische Aufzeichnungsmaterialien in diffusionsfester Form einlagerbar sein. Verglichen mit den bekannten Sulfiliminverbindungen sollen sie leichter reduzierbar sein und daher zu ihrer Spaltung geringere Mengen an ED-Verbindungen und folglich auch an Silberhalogenid benötigen.

Gegenstand der Erfindung ist ein fotografisches Aufzeichnungsmaterial mit mindestens einer lichtempfindlichen Silberhalogenidemulsionsschicht und einer dieser zugeordneten nichtdiffundierenden Sulfiliminverbindung, die unter fotografischen Entwicklungsbedingungen durch

Reduktion eine diffusionsfähige fotografisch aktive Verbindung in Freiheit zu setzen vermag, dadurch gekennzeichnet, daß die Sulfiliminverbindung der folgenden Formel I entspricht:

$$R^1-\overset{R^2}{\underset{\oplus}{S}}-\underset{\ominus}{N}-A-X \qquad I$$

worin bedeuten

$R^1$ und $R^2$ gleiche oder verschiedene Arylreste, von denen mindestens einer mindestens eine elektronenanziehende Gruppe in o- oder p-Stellung enthält und von denen mindestens einer eine Ballastgruppe enthält;

A ein Bindeglied zwischen N und X, bestehend aus einem Benzolring, der mit der 1-Stellung direkt an N gebunden ist, einer elektronenanziehenden Gruppe in 2-Stellung des Benzolringes und mindestens einer weiteren elektronenanziehenden Gruppe in 4- oder 6-Stellung des Benzolringes:

X einen integrierenden Rest, der aus der Sulfiliminverbindung zusammen mit A und N als diffusionsfähige fotografisch aktive Verbindung der Formel $H_2N-A-X$ in Freiheit gesetzt wird.

Die durch $R^1$ und $R^2$ dargestellten Arylreste sind vorzugsweise Phenylreste, die außer den erwähnten elektronenanziehenden Gruppen und Ballastgruppen gegebenenfalls zusätzliche Substituenten wie Halogen, Hydroxy, Alkoxy, Acyloxy, Acylamino oder Alkyl, sowie gegebenenfalls einen ankondensierten Benzolring enthalten können.

Als elektronenanziehende Gruppen in der Arylresten $R^1$ und $R^2$ kommen hauptsächlich Nitrogruppen in Frage, daneben aber auch beispielsweise $-CF_3$, -CN, Sulfamoyl, Alkylsulfonyl, Carbalkoxy oder Carbamoyl. Die notwendigerweise wenigstens einmal vorhandene elektronenanziehende Gruppe und die notwendigerweise wenigstens einmal vorhandene Ballastgruppe können an dem gleichen Arylrest ($R^1$, $R^2$) angeordnet sein, ja sogar in einem einzigen Substituenten vereinigt sein, z.B. in Form einer Sulfamoylgruppe, die am Stickstoffatom durch einen längeren Alkylrest substituiert ist.

Als Ballastgruppe sind solche Reste anzusehen, die es ermöglichen, die erfindungsgemäßen Sulfiliminverbindungen in den üblicherweise bei fotografischen Materialien verwendeten hydrophilen Kolloiden diffusionsfest einzulagern. Hierzu sind vorzugsweise organische Reste geeignet, die im allgemeinen geradkettige oder verzweigte aliphatische Gruppen mit im allgemeinen 8 bis 22 C-Atomen und gegebenenfalls auch carbocyclische oder heterocyclische gegebenenfalls aromatische Gruppen enthalten. Mit dem übrigen Molekülteil sind diese Reste entweder direkt oder indirekt, z.B. über eine der folgenden Gruppe verbunden; -NHCO-, $-NHSO_2-$, -NR-, wobei R Wasserstoff oder Alkyl bedeutet, -O- oder -S-. Zusätzlich kann die Ballastgruppe auch wasserlöslichmachende Substituenten enthalten, wie z.B. Sulfogruppen oder Carboxylgruppen, die in bestimmten Fällen auch in anionischer Form vorliegen können. Da die

Diffusionseigenschaften von der Molekülgröße der verwendeten Gesamtverbindung abhängen, genügt es in bestimmten Fällen, z.B. wenn das verwendete Gesamtmolekül groß genug ist, oder wenn die Sulfiliminverbindungen unter Verwendung sogenannter Ölbildner oder hochsiedender Kupplerlösungsmittel in emulgierter Form in die Schichten eingearbeitet werden, als Ballastgruppen auch kürzerkettige Reste, z.B. Isoamyl- oder tert.-Butylreste, zu verwenden.

Die aus der erfindungsgemäßen Sulfiliminverbindungen durch Reduktion freigesetzten fotografisch aktiven Verbindungen der Formel $H_2N$-A-X sind beispielsweise Farbstoffe oder Farbstoffvorprodukte, aber auch sonstige nichtfarbbildende fotografisch aktive Verbindungen, wie Stabilisatoren, Entwicklungsinhibitoren und Bleichbeschleuniger. Dementsprechend ist X der integrierende Rest eines Farbstoffes, eines Farbstoffvorproduktes oder einer sonstigen nichtfarbbildenden fotografisch aktiven Verbindung. Durch die Bezeichnung "integrierend" wird zum Ausdruck gebracht, daß die betreffenden Eigenschaften nicht nur ausschließlich der Gruppe X zuzuschreiben zu sein brauchen, sondern in bestimmten Fällen erst durch die Vereinigung von X und A zustande kommen. So kann z.B. X der Rest eines Farbstoffes sein, d.h. einer Gruppe die für sich bereits farbig ist, oder aber ein Rest, der erst zusammen mit der Gruppe A einen Farbstoff ergibt, so daß im letzteren Fall dem Farbstoffrest die Formel -A-X zugeschrieben werden müßte.

Als Farbstoffreste sind grundsätzlich die Reste von Farbstoffen aller Farbstoffklassen geeignet, soweit

sie genügend diffusionsfähig sind, um durch die Schichten des lichtempfindlichen Materials hindurch in die Bildempfangsschicht diffundieren zu können. Zu diesem Zweck können die Farbstoffreste mit einer oder mehreren alkalilöslichmachenden Gruppen versehen sein. Als alkalilöslichmachenden Gruppen sind unter anderem geeignet Carboxylgruppen, Sulfogruppen, Sulfonamidgruppen sowie aromatische Hydroxylgruppen. Solche alkalilöslichmachende Gruppen können in den erfindungsgemäß verwendeten Farbabspaltern bereits vorgebildet sein oder erst aus der Abspaltung des Farbstoffrestes von dem mit Ballastgruppen behafteten Trägerrest resultieren. An Farbstoffen, die für das erfindungsgmäße Verfahren besonders geeignet sind, sind zu erwähnen Azofarbstoffe, Azomethinfarbstoffe, Anthrachinonfarbstoffe, Phthalocyaninfarbstoffe, indigoide Farbstoffe, Triphenylmethanfarbstoffe, einschließlich solcher Farbstoffe, die mit Metallionen komplexiert oder komplexierbar sind.

Unter den Resten von Farbstoffvorläufern sind die Reste solcher Verbindungen zu verstehen, die im Laufe der fotografischen Verarbeitung durch übliche oder zusätzliche Verarbeitungsschritte, sei es durch Oxidation, sei es durch Kupplung, durch Komplexbildung oder durch Freilegung einer auxochromen Gruppe in einem chromophoren System, beispielsweise durch Verseifung, in Farbstoffe übergeführt werden. Farbstoffvorläufer in diesem Sinn können sein Leukofarbstoffe, Kuppler oder auch Farbstoffe, die im Laufe der Verarbeitung in andere Farbstoffe umgewandelt werden. Sofern nicht eine Unterscheidung zwischen Farbstoffresten und den Resten von Farbstoffvorläufern von wesentlicher Bedeutung ist, sollen letztere im folgenden auch unter der Bezeichnung Farbstoffreste verstanden werden.

Geeignete Sulfiliminverbindungen der vorliegenden Erfindung entsprechen beispielsweise der folgenden Formel II

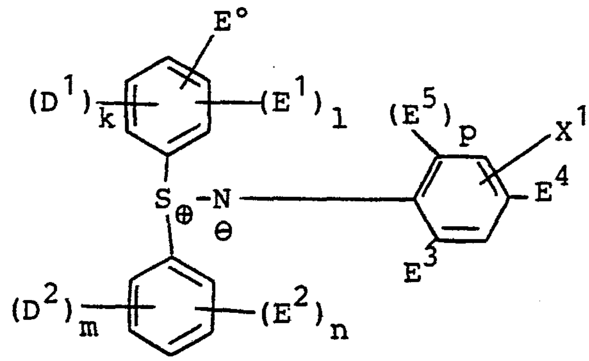

II

worin bedeuten

| | |
|---|---|
| $E°$, $E^1$, $E^2$ | elektronenanziehende Gruppen in o- oder p-Stellung, |
| $D^1$, $D^2$ | Ballastgruppen, |
| k,l,m,n,p | jeweils 0 oder 1 mit der Maßgabe, daß $k + m \geq 1$, |
| $E^3$,$E^4$,$E^5$ | elektronenanziehende Gruppen, |
| $X^1$ | einen integrierenden Rest einer fotografisch aktiven Verbindung der entweder direkt an den Benzolring gebunden ist oder als Substituent entweder in $E^4$ oder in $E^5$ enthalten ist und der aus der Sulfilimin- |

verbindung zusammen mit N und dem Benzolring als diffusionsfähige fotografisch aktive Verbindung der Formel

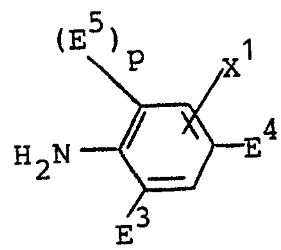

in Freiheit gesetzt wird.

Als elektronenanziehende Gruppen E°, $E^1$, $E^2$, $E^3$, $E^4$ und $E^5$ kommen beispielsweise in Frage: $-NO_2$, $-CF_3$, -CN, Alkylsulfonyl, Sulfamoyl, Carbalkoxy und Carbamoyl. E° bedeutet vorzugsweise $-NO_2$, Alkylsulfonyl oder Sulfamoyl, und $E^3$ bedeutet vorzugsweise $-NO_2$. An den räumlichen Umfang der elektronenanziehenden Gruppen sind keine besonderen Anforderungen gerichtet mit dem einzigen Vorbehalt, daß die in $E^3$, $E^4$ und $E^5$ gegebenenfalls vorhandenen Substituenten die Diffusionsfähigkeit der freigesetzten fotografisch aktiven Verbindung nicht behindern sollen.

Die in der Definition von E°, $E^1$, $E^2$, $E^3$, $E^4$, $E^5$ erwähnten Sulfamoyl- bzw. Carbamoylgruppen können am Stickstoffatom unsubstituiert sein oder substituiert z.B. mit Alkyl oder Aryl. Das Stickstoffatom kann auch identisch sein mit demjenigen einer cyclischen Aminogruppe (Pyrrolidino, Piperidino, Morpholino). Der in einer der genannten Carbalkoxy-, Alkylsulfonyl- und alkylsubstituierten Sulfamoyl- bzw. Carbamoylgruppen der Definition von E°, $E^1$,$E^2$,$E^3$,$E^4$,$R^5$ oder in einem der erwähnten zusätzlichen

Substituenten wie Alkoxy, Acyloxy oder Acylamino enthaltende Alkylteil kann im Fall von E°, $E^1$ und $E^2$ bis zu 22 C-Atome umfassen und gegebenenfalls weitere Substituenten tragen wie etwa Hydroxy, Halogen, Alkoxy oder Aryloxy.

$X^1$ bedeutet den Rest eines Farbstoffes, eines Farbstoffvorproduktes, einer sonstigen nichtfarbbildenden fotografisch aktiven Verbindung oder einen Rest, der zusammen mit dem Phenylring, an den er gebunden ist, den Rest einer fotografisch aktiven Verbindung bildet. Bei farbgebenden Sulfiliminverbindungen (Farbabspalter) der vorliegenden Erfindung ist $X^1$ beispielsweise der Rest eines Azofarbstoffes oder ein Arylazorest (Teil eines Azofarbstoffes).

Besonders bevorzugte Sulfiliminverbindungen der vorliegenden Erfindung entsprechen der folgenden Formel III (Farbabspalter):

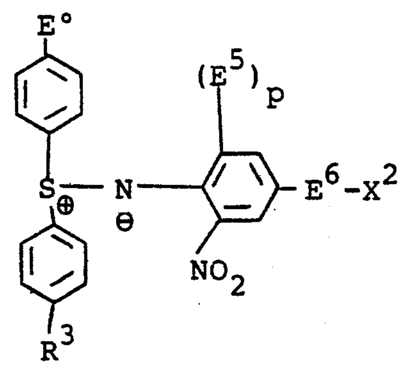

III

worin bedeuten

E° -$NO_2$, Alkylsulfonyl oder Sulfamoyl,

$R^3$ Wasserstoff, Halogen, Alkyl, Alkoxy, Acylamino, Carbamoyl oder Sulfamoyl, wobei mindestens einer der Reste E° und $R^3$ einen Ballastrest enthält,

$E^5$ $-NO_2$, $-CF_3$, -CN, Alkylsulfonyl, Sulfamoyl, Carbalkoxy oder Carbamoyl,

$E^6$ $-CO-(R^4)_q-$ oder $-SO_2-(R^4)_q-$,

$R^4$ Alkylen mit bis zu 4 C-Atomen,

p, q 0 oder 1,

$X^2$ einen Rest eines Farbstoffes oder Farbstoffvorproduktes.

Acylreste, wie sie beispielsweise in Substituenten an den durch $R^1$ und $R^2$ dargestellten Arylgruppen vorkommen (Acyloxy, Acylamino) oder in einer durch $R^3$ dargestellten Acylaminogruppe, leiten sich von organischen Carbon- oder Sulfonsäuren durch Entfernung einer Hydroxylgruppe ab. Acetyl, Pivaloyl, Pyruvoyl, Hexadecanoyl, Benzoyl, N-Octadecylcarbamoyl, N-Octadecyloxycarbonyl, Methylsulfonyl und p-Toluolsulfonyl sind Beispiele solcher Acylreste.

Beispiele für erfindungsgemäß geeignete nichtdiffundierende Sulfiliminverbindungen, die bei Reduktion diffusionsfähige Farbstoffe freisetzen, sind in der folgenden beiden Tabellen aufgeführt.

AG 1845

Tabelle 1 (Formel IV)

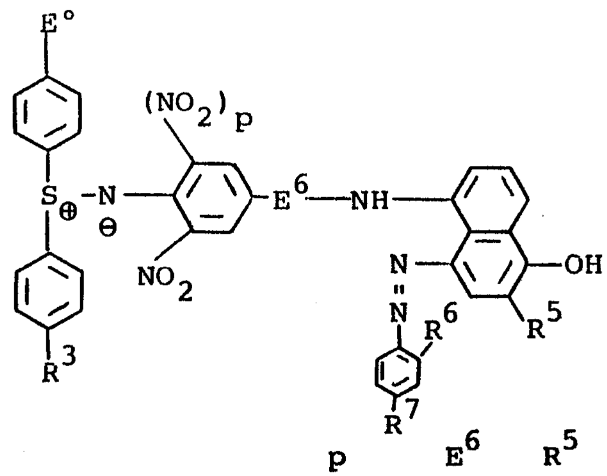

IV

| Nr. | E° | $R^3$ | p | $E^6$ | $R^5$ | $R^6$ | $R^7$ | Farbe |
|---|---|---|---|---|---|---|---|---|
| 1 | $NO_2$ | $NHCOC_{15}H_{31}$ | 0 | CO | H | $SO_2CH_3$ | $NO_2$ | bg |
| 2 | $NO_2$ | $NHCOC_{15}H_{31}$ | 0 | CO | H | H | $SO_2NH_2$ | pp |
| 3 | $NO_2$ | $NHCOC_{15}H_{31}$ | 1 | CO | H | $SO_2CH_3$ | $NO_2$ | bg |
| 4 | $NO_2$ | $NHCOC_{15}H_{31}$ | 1 | CO | H | H | $SO_2NH_2$ | pp |
| 5 | $SO_2CH_3$ | $SO_2N(CH_3)C_{18}H_{37}$ | 0 | CO | H | H | $SO_2NH_2$ | pp |
| 6 | $SO_2NH$–$C_{16}H_{33}$ | $t\text{-}C_4H_9$ | 0 | CO | H | $SO_2CH_3$ | $NO_2$ | bg |
| 7 | $SO_2NCH_3$–$CH_3$ | $NHCOC_{15}H_{31}$ | 0 | $SO_2$ | $SO_2NHC_4H_9$ | $SO_2CH_3$ | $NO_2$ | bg |
| 8 | $SO_2CH_3$ | $SO_2N(CH_3)C_{18}H_{37}$ | 0 | $SO_2$ | $SO_2NHC_4H_9$ | $SO_2CH_3$ | $NO_2$ | bg |
| 9 | $NO_2$ | $NHCOC_{15}H_{31}$ | 0 | $SO_2$ | $SO_2NHC_4H_9$ | $SO_2CH_3$ | $NO_2$ | bg |
| 10 | $NO_2$ | $NHCOC_{15}H_{31}$ | 0 | $SO_2$ | $SO_2NHC_4H_9$ | $SO_2NHC_4H_9$ | $NO_2$ | bg |

AG 1845

Tabelle 1 (Fortsetzung)

| Nr. | E° | $R^3$ | p | $E^6$ | $R^5$ | $R^6$ | $R^7$ | Farbe |
|---|---|---|---|---|---|---|---|---|
| 11 | $NO_2$ | $NHCOC_{15}H_{31}$ | O | $SO_2$ | H | $SO_2NH_2$ | $NO_2$ | bg |
| 12 | $NO_2$ | $NHCOC_{15}H_{31}$ | O | $SO_2$ | H | $SO_2NHC_4H_9$ | $NO_2$ | bg |
| 13 | $NO_2$ | $NHCOC_{15}H_{31}$ | O | CO | H | $SO_2NH_2$ | $NO_2$ | bg |

bg = blaugrün

pp = purpur

Tabelle 2 (Formel V)

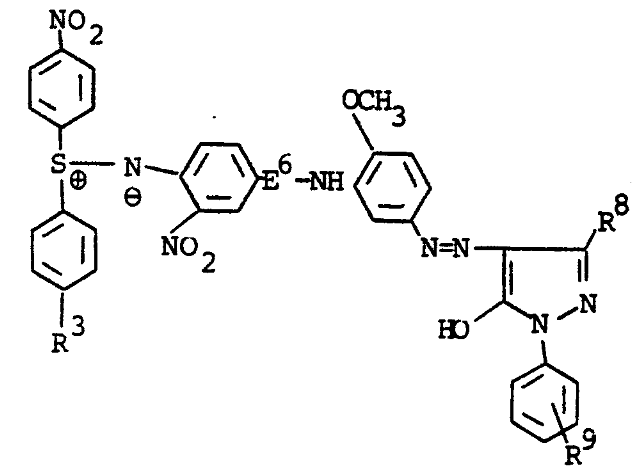

V

| Nr. | $R^3$ | $E^6$ | $R^8$ | $R^9$ | Farbe |
|---|---|---|---|---|---|
| 14 | $NHCOC_{15}H_{31}$ | CO | $CH_3$ | $3\text{-}SO_2NH_2$ | gelb |
| 15 | $OC_{18}H_{37}$ | CO | CN | $4\text{-}SO_2NH_2$ | gelb |
| 16 | $NHCOC_{15}H_{31}$ | $SO_2$ | $CH_3$ | $3\text{-}SO_2NH_2$ | gelb |
| 17 | $OC_{18}H_{37}$ | $SO_2$ | CN | $4\text{-}SO_2NH_2$ | gelb |

Die Herstellung der Sulfiminfarbabspalter gelingt durch Aminierung der entsprechenden Thioether $R^1\text{-}S\text{-}R^2$ mit Mesitylsulfonyl-O-hydroxylamin (MSH) VI und nachfolgende Umsetzung des erhaltenen Sulfilimin-mesitylats VII mit Farbstoffhalogeniden VIII

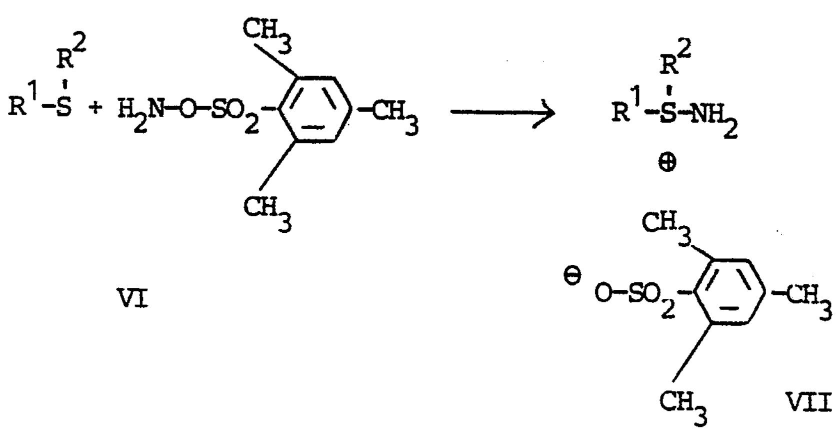

VI

VII

VII + 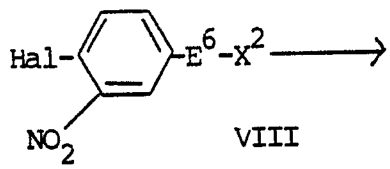 III

VIII

Zur Chemie der Sulfiliminverbindungen sei verwiesen auf Chem. Rev. 77, 409 ff (1977).

Im folgenden wird die Herstellung der erfindungsgemäßen Sulfilimin-Farbabspalter anhand einiger Beispiele beschrieben. Die anderen der oben genannten Verbindungen bzw. weitere unter die allgemeinen Formeln I und II fallende Verbindungen werden in analoger Weise hergestellt. Der Farbstoffteil der SR-Farbabspalter entspricht in der Konstitution den typischen Farbstoffen, wie sie üblicherweise bei fotografischen Materialien und Verfahren, in denen diffusionsfähige Farbstoffe zur Anwendung kommen, eingesetzt werden.

Sulfiliminfarbstoff Nr. 2:

Stufe 1

4-Nitro-4'-palmitoylamino-diphenyl-sulfilimin-mesitylat

8,6 g Mesitylsulfonyl-O-hydroxylamin (0,4 Mol) (Y. Tamura, I. Minamihawa, M. Ikeda, Synthesis 1977,1) wurden in 80 ml Methylenchlorid gelöst und unter Rühren bei 0°C zu einer Aufschlämmung von 9,7 g (0,2 Mol) 4-Nitro-4'-palmitoylaminodiphenylsulfid in 80 ml Methylenchlorid zugetropft. Innerhalb von 3 h entstand eine klare

Lösung, aus der das Mesitylat langsam auskristallisierte. Der Niederschlag wurde abgesaugt und mit Ether gewaschen. Ausbeute 12,5 g ≙ 90,2 % d.Th.

Stufe 2

5-(3'-Nitro-4'-fluorbenzoylamino)-1-naphthol

22,4 g 3-Nitro-4-fluorbenzoylchlorid (0,12 Mol) wurden bei 0°C zu einer Suspension von 19,1 g 5-Amino-1-naphthol (0,12 Mol) in 120 ml Acetonitril und 14,2 g N,N-Dimethylanilin zugetropft. Es wurde weitergerührt, bis sich Raumtemperatur einstellte, und dann wurde noch 30 min auf 50°C erhitzt. Der gelbe Niederschlag wurde abgesaugt und mit Acetonitril gewaschen. Der Niederschlag wurde in THF gelöst und mit A-Kohle gerührt, filtriert und aus dem Filtrat wurde das Produkt mit Benzin 50/75 gefällt. Ausbeute: 25,8 g ≙ 66 % d. Th.; Fp. 235-238°C.

Stufe 3

4-(4'-Sulfamoylphenylazo)-5-(3"-nitro-4"-fluorbenzoylamino)-1-naphthol

3,65 g 4-Aminobenzolsulfonamid (0,212 Mol) wurden in 6 ml konzentrierter Salzsäure und 25 ml Wasser gelöst und mit 1,5 g Natriumnitrit, in 7 ml Wasser gelöst, diazotiert. In eine Lösung von 6,25 g der Verbindung aus Stufe 2 (0,20 Mol) in 80 ml Pyridin und 40 ml Wasser wurde die Diazoniumsalzlösung bei ca. 0°C zugetropft. Es wurde 2 h nachgerührt und auf Eis/Salzsäure ausgefällt. Der Farbstoff wurde aus Methanol gereinigt. Ausbeute: 5,95 g ≙ 58,5 % d.Th.; Fp. 196-200°C.

0093311

Stufe 4

Sulfiliminfarbstoff Nr. 2

1,4 g des Sulfiliminmesitylats aus Stufe 1 (2 mMol), 1,02 g des Farbstoffs aus Stufe 3 (2 mMol) und 0,55 g Pottasche wurden in 20 ml Dioxan 60 h bei Raumtemperatur gerührt. Das Reaktionsprodukt wurde abgesaugt und in dem Lösungsmittelgemisch Toluol: Essigester : Aceton 2 : 2 : 1 säulenchromatografisch gereinigt. Ausbeute: 0,78 g ≙ 39,5 % d.Th.; Fp. 149-150°C.

Sulfiliminfarbstoff Nr. 9

Stufe 1

5-Acetamino-1-acetoxynaphthalin-2-sulfonsäure-Na-Salz

48 g 5-Amino-1-naphthol-2-sulfonsäure (0,2 Mol) wurden mit 80 ml Acetanhydrid und 40 ml Pyridin 1 30 min auf 110-120°C erhitzt. Die abgekühlte Lösung wurde zweimal mit 500 ml Benzol extrahiert, wobei ein öliger Rückstand erhalten wurde, der in 500 ml gesättigter NaCl-Lösung aufgenommen wurde. Nach dem Einengen wurde mit Methanol aufgenommen und von NaCl abfiltriert. Dieser Vorgang wurde so oft wiederholt, bis kein NaCl mehr ausfiel. Der Rückstand wurde mit Acetonitril zur Kristallisation gebracht. Ausbeute: 60 g ≙ 87 %.

Stufe 2

5-Acetamino-1-acetoxynaphthalin-2-sulfonsäurechlorid

34,5 g der Verbindung aus Stufe 1 (0,1 Mol( wurden mit 140 ml $POCl_3$ unter Stickstoff gerührt und mit 7,75 ml DMF (0,1 Mol) langsam versetzt. Nach einer weiteren Stunde wurde auf Eis gegossen, abgenutscht und getrocknet. Ausbeute: 19 g = 55 % d. Th.; Fp: 148-155°C.

Stufe 3

5-Acetamino-1-acetoxynaphthalin-2-sulfonsäure-tert.-butylamid

14,5 g t-Butylamin in 50 ml Aceton wurden in eine Lösung von 18,8 g der Verbindung aus Stufe 2 (0,55 Mol) in 150 ml Aceton bei -5-0°C eingetropft. Es wurde über Nacht weitergerührt, vom Niederschlag abfiltriert, eingeengt und aus Ether mit wenig Acetonitril kristallisiert. Ausbeute: 19,2 g ≙ 92 % d.Th.; Fp. 203-206°C.

Stufe 4

5-Amino-1-naphthol-2-sulfonsäure-t-butylamid

7,56 g der Verbindung aus Stufe 3 (0,02 Mol) wurden mit 30 ml 30 %iger KOH unter Stickstoff 30 h bei 100°C gerührt. Die abgekühlte Lösung wurde abgenutscht, das Produkt in Wasser gelöst, angesäuert und abfiltriert. Ausbeute: 4,4 g = 75 % d.Th.; Fp. 184-185°C.

Stufe 5

5-(3'-Nitro-4'-fluorphenylsulfonamido)-1-naphthol-2-sulfonsäure-t-butylamid

In einer Lösung von 2,94 g der Verbindung aus Stufe 4 (0,01 Mol) in 10 ml Pyridin wurden unter Rühren bei -5°C 2,4 g 3-Nitro-4-fluorphenylsulfochlorid (0,01 Mol) in 10 ml Pyridin eingetropft. Nach beendeter Reaktion wurde auf Eiswasser gegossen, angesäuert und abgenutscht. Das Rohprodukt wurde in Methanol gelöst, mit A-Kohle gerührt, filtriert und eingeengt. Kristallisation aus Ether/Benzin.
Ausbeute: 3 g ≙ 60 % d. Th.; Fp 171-172°C.

Stufe 6

4-(4'-Nitro-2'-methylsulfonylphenylazo)-5-(3"-nitro-4"-fluorphenylsulfonamido-1-naphthol-2-sulfonsäure-6-butylamid

2,37 g 5-Nitro-2-aminophenyl-methylsulfon (0,011 Mol) in 15 ml Eisessig wurden bei 15°C unter Rühren tropfenweise in 1,6 ml Nitrosylschwefelsäure (0,033 Mol) versetzt. Diese Diazoniumsalzlösung wurde 20 min nachgerührt und bei -5°C zu einer Lösung von 5,5 g der Verbindung aus Stufe 5 (0,11 Mol) in 100 ml Methanol pipettiert. Es wurde 2 h nachgerührt, mit 100 ml kaltem Wasser versetzt, abgenutscht und getrocknet.
Ausbeute: 5,7 ≙ 71 % d.Th.

Stufe 7

Sulfiliminfarbstoff Nr. 9

3,68 g des Sulfiliminmesitylats aus Stufe 1 des Farbstoffs Nr. 2 (0,00527 Mol) wurden in 15 ml Dioxan und 15 ml Ethanol mit 0,73 g Pottasche 1 h bei Raumtemperatur gerührt, dann mit 2,8 g des Farbstoffs aus Stufe 6 (0,00385 Mol) versetzt. Es wurde 2 h gerührt, filtriert, eingeengt und der Rückstand in dem Gemisch Essigester: Acetonitril 20 : 1 säulenchromatografisch gereinigt. Ausbeute: 3,2 g = 69 % d.Th.; Fp. 185-192°C.

Sulfiliminfarbstoff Nr. 13

Stufe 1
4-(4'-nitro-2'-sulfamoyl-phenylazo)-5-(3"-nitro-4"-fluorbenzoylamino)-1-naphthol

3,0 g 6-Amino-3-nitro-benzol-sulfonsäureamid (15 mMol) wurden in 26,2 ml Eisessig und 7,5 ml Methanol aufgeschlämmt und anschließend mit 3 ml Nitrosylschwefelsäure (58,2 mMol) bei 10°C-15°C diazotiert. In eine Lösung von 4,55 g der Verbindung aus Stufe 2 des Farbstoffs Nr. 2 (14 mMol) in 4,8 ml Pyridin und 100 ml Methanol wurde die Diazoniumsalzlösung bei ca. 0°C zugetropft. Es wurde 3 h nachgerührt, der Niederschlag abgesaugt und getrocknet.
Ausbeute: 3,9 g ≙ 71,8 % d. Th.; Fp. 195-200°C.

Stufe 2
Sulfiliminfarbstoff Nr. 13

1,4 g des Sulfiliminmesitylats aus Stufe 1 (2 mMol) des Farbstoffs Nr. 2, 1,18 g des Farbstoffs aus Stufe 1 (2 mMol) und 0,55 g Pottasche (4 mMol) wurden in 25 ml

Dimethylformamid 6 h bei Raumtemperatur gerührt. Die Reaktionslösung wurde auf Wasser/Eisessig gegossen und mit Essigester extrahiert. Das Rohprodukt wurde in dem Lösungsmittelgemisch Essigester:Methanol 1=:1 säulenchromatographisch gereinigt. Ausbeute: 1,26 g ≙ 61 % d.Th.; Fp. 203-206°C.

Sulfiliminfarbstoff Nr. 16

Stufe 1

4-(3'-Acetamino-6'-methoxy-phenylazo)-1-(3"-sulfamoylphenyl)-3-methylpyrazolon-5

7,2 g 2-Amino-4-acetylaminoanisol (40 mMol) wurden in 12 ml konzentrierter Salzsäure (120 mMol) und 80 ml Wasser aufgeschlämmt und mit 2,76 g Natriumnitrit (40 mMol) bei 0°C diazotiert. In eine Lösung von 10,4 g 1(3-aminosulfonylphenyl)-3-methylpyrazolon (37 mMol) in 60 ml 2 n Natronlauge (120 mMol) und 80 ml Wasser wurde die Diazoniumsalzlösung zugetropft. Es wurde 1 h bei 0°C nachgerührt und dann der Niederschlag abgesaugt. Ausbeute: 17,15 g ≙ 89,5 % d.Th.; Fp. 312-314°C.

Stufe 2

4-(3'-Amino-6'-methoxy-phenylazo)-1-(3"-sulfamoylphenyl)-3-methyl-pyrazolon-5

7,2 g der Verbindung aus Stufe 1 (0,016 Mol) wurde mit 120 ml Wasser und 21,4 ml 30 %iger Natronlauge (0,016 Mol) innerhalb 2 1/2 h unter Rückfluß verseift. Die

Reaktionslösung wurde kalt mit Essigester versetzt, der Niederschlag wurde abgesaugt.
Ausbeute: 5,5 g ≙ 84,5 % d.Th.; Fp. 249-251°C.

Stufe 3

3-(3"-Nitro-4"-fluor-phenyl-sulfamoylphenyl)-6'-methoxy-phenylazo)-1-(3"-sulfamoyl-phenyl)-3-methylpyrazolon-5

4,02 g Verbindung aus Stufe 2 (10 mMol) wurden mit 50 ml Acetonitril und 750 mg (10 mMol) Pyridin aufgeschlämmt und bei 0°C mit 2,39 g 3-Nitro-4-fluor-phenyl-sulfochlorid (10 mMol) umgesetzt.
Ausbeute: 5,02 g ≙ 82,5 % d.Th.; Fp. 273-278°C.

Stufe 4

Sulfiliminfarbstoff Nr. 16

1,4 g des Sulfiliminmesitylats aus Stufe 2 der Herstellung des Farbstoffs Nr. 2 (2 mMol), 1,21 g des Farbstoffs aus Stufe 3 und 276 mg (2 mMol) Pottasche wurden in 60 ml Ethanol 3 h erhitzt. Der Niederschlag wurde kalt abgesaugt und in dem Lösungsmittelgemisch von Toluol : Acetonitril : Essigester 40 : 20 : 10 säulenchromatographisch getrennt.
Ausbeute: 1,13 ≙ 52 % d.Th.; Fp. 157-160°C.

Die reduzierbaren, reduktiv spaltbaren Farbabspalter der vorliegenden Erfindung werden zweckmäßigerweise zusammen mit sogenannten Elektronendonorverbindungen (ED-Verbindungen) verwendet. Letztere wirken als Reduktionsmittel, das bei der Entwicklung des Silberhalogenids bildmäßig verbraucht wird und mit seinem nicht verbrauchten Anteil seinerseits den zugeordneten Farbabspalter reduziert und dadurch die Abspaltung des Farbstoffes bewirkt. Geeignete ED-Verbindungen sind beispielsweise nicht oder nur wenig diffundierende Derivate des Hydrochinons, des Benzisoxazolons, des p-Aminophenols oder der Ascorbinsäure (z.B. Ascorbylpalmitat), die beispielsweise in der DE-A 28 09 716 beschrieben sind. Geeignete Verbindungen sind weiterhin beschrieben in DE-A 29 47 425. Die ED-Verbindungen können erfindungsgemäß auch in einer verkappten Form als sogenannte ED-Vorläuferverbindungen vorliegen, die zwar selbst nicht als Reduktionsmittel wirken gegenüber belichtetem Silberhalogenid oder reduzierbaren farbgebenenden Verbindungen, die aber unter den alkalischen Entwicklungsbedingungen in die eigentlichen ED-Verbindungen überführt werden.

Solche ED-Verbindungen sind beispielsweise beschrieben in Research Disclosure 19 429 (Juni 1979) und 19507 (Juli 1979) sowie in DE-A 30 06 368.

Als ED-Verbindungen bzw. ED-Vorläuferverbindungen sind beispielsweise die folgenden geeignet:

ED 1

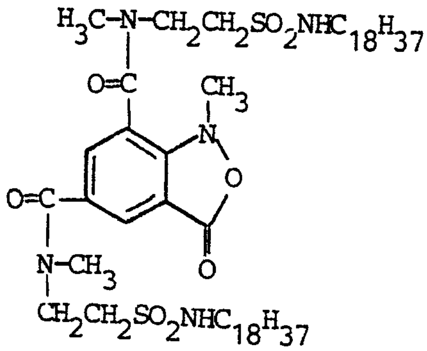

ED 2

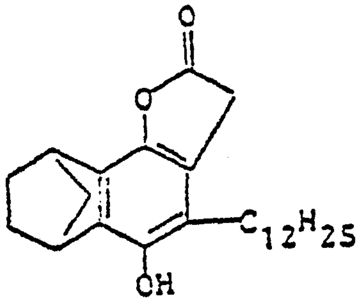

ED 3

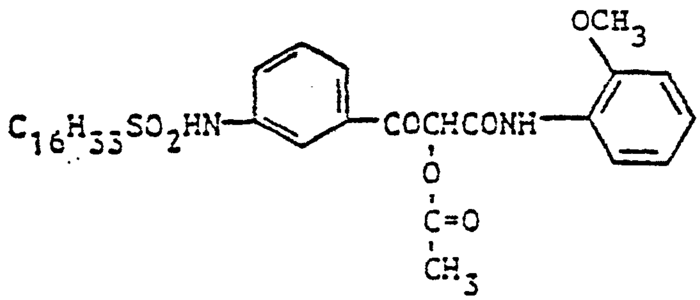

ED 4

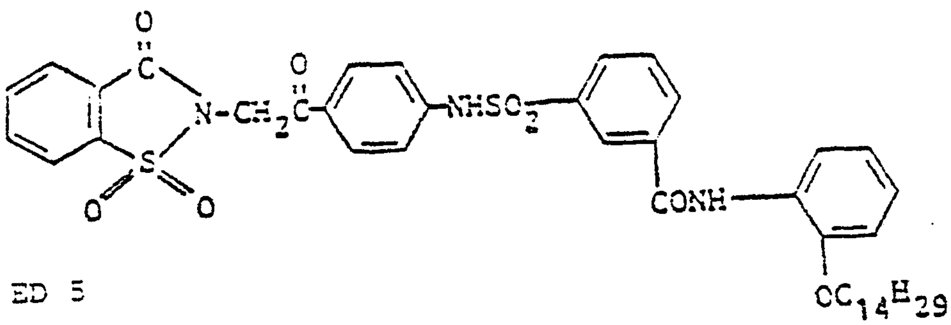

ED 5

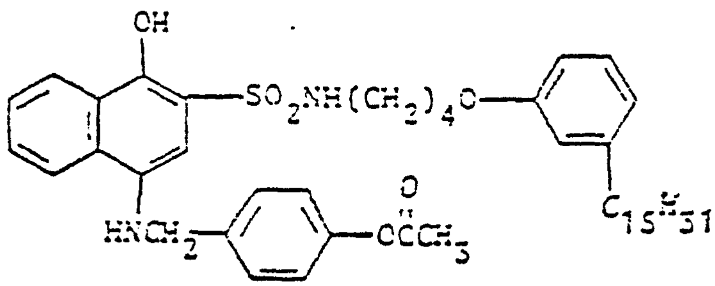

ED 6

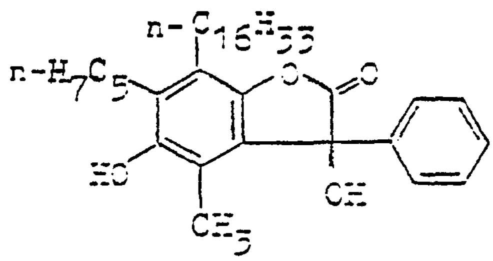

ED 7

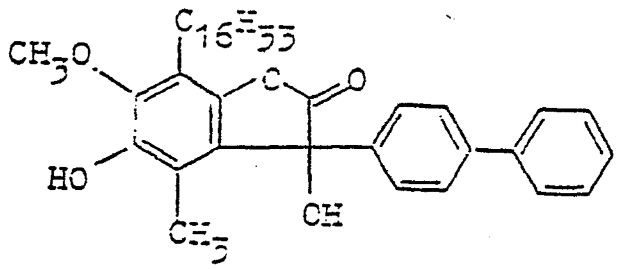

Von ganz besonderer Bedeutung für die Verwendung in Kombination mit den erfindungsgemäßen SR-Verbindungen sind die ED-Vorläuferverbindungen des Typs der genannten Verbindungen ED-6 und ED-7, die sich durch die folgende allgemeine Formel definieren lassen:

III

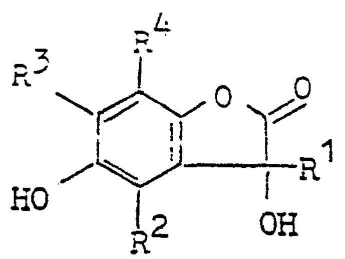

worin bedeuten:

$R^1$ einen carbocyclischen oder heterocyclischen aromatischen Rest,

$R^2$, $R^3$, $R^4$ gleiche oder verschiedene Substituenten, und zwar Wasserstoff, Alkyl, Alkenyl, Aryl, Alkoxy, Alkylthio, Amino oder $R^3$ und $R^4$ vervollständigen zusammen einen ankondensierten, insbesondere carbocyclischen Ring und wobei mindestens einer der Substituenten $R^1$, $R^2$, $R^3$ und $R^4$ einen die Diffusion erschwerenden Ballastrest mit 10-22 C-Atomen enthält.

Durch die Kombination solcher ED-Vorläuferverbindungen mit den erfindungsgemäßen SR-Verbindungen werden ausgezeichnete Farbdichten und Farbbilder praktisch ohne störenden Schleier erhalten.

Das lichtempfindliche Element des erfindungsgemäßen fotografischen Aufzeichnungsmaterials enthält in der Regel, d.h. wenn mehrfarbige Übertragsbilder hergestellt werden sollen, drei bilderzeugende Schichteinheiten, von denen jede mindestens eine lichtempfindliche Silberhalogenidemulsionsschicht und eine dieser zugeordnete Kombination aus einem nicht diffundierenden reduzierbaren Farbabspalter und einer ED-Verbindung enthält. Eine der Schichteinheiten ist überwiegend für blaues Licht empfindlich, eine weitere für grünes Licht und eine dritte für rotes Licht, wobei die zugeordneten Farbabspalter jeweils komplementärfarbige Bildfarbstoffe liefern. Das erfindungsgemäße Verfahren ist jedoch keineswegs auf die Herstellung mehrfarbiger Bilder beschränkt, sondern kann auch mit einem Aufzeichnungsmaterial ausgeführt werden, das weniger als drei bilderzeugende Schichteinheiten, z.B. nur eine einzige, enthält.

Unter "Zuordnung" und "zugeordnet" wird verstanden, daß die gegenseitige Anordnung von Silberhalogenidemulsion, ED-Verbindungen und Farbabspalter von solcher Art ist, daß eine Wechselwirkung zwischen ihnen möglich ist, die bei bildmäßige Übereinstimmung zwischen dem bei der Entwicklung gebildeten Silberbild und dem Verbrauch an ED-Verbindung einerseits sowie eine Reaktion zwischen der nicht verbrauchten ED-Verbindung und dem Farbabspalter andererseits zuläßt, so daß in Übereinstimmung mit dem nicht entwickelten Silberhalogenid eine bildweise Verteilung von diffusionsfähigem Farbstoff erzeugt wird. Hierzu müssen lichtempfindliches Silberhalogenid und Kombination aus Farbabspalter und ED-Verbindung nicht notwendigerweise in derselben Schicht vorliegen; sie können auch in zueinander benachbarten Schichten untergebracht sein, die jeweils der gleichen Schichteinheit angehören.

Um aber eine hinreichende Wechselwirkung zwischen Farbabspalter und der zugeordneten ED-Verbindung zu gewährleisten, empfiehlt es sich, diese beiden Verbindungen einer Kombination in der gleichen Schicht unterzubringen, die jedoch nicht mit der zugeordneten Silberhalogenidemulsionsschicht identisch sein muß.

Für die Einarbeitung von Farbabspaltern und ED-Verbindungen sind alle Methoden geeignet, nach denen üblicherweise hydrophobe Verbindungen in fotografischen Schichten eingearbeitet werden, d.h. es kommen die üblichen Emulgiertechniken in Frage, z.B. Methoden,

nach denen fotografische Hilfsstoffe den Gießlösungen in Form von Emulgaten unter Verwendung sogenannter Ölbildner zugesetzt werden.

Der Farbabspalter wird in einer Schicht in der Regel in einer solchen Menge verwendet, die ausreicht, um ein Farbbild mit möglischt hoher maximaler Farbdichte zu erzeugen, beispielsweise in einer Menge von 1 - $20.10^{-4}$ $Mol/m^2$. Die ED-Verbindung ist in der Menge an diejenige des Farbabspalters angepaßt. Sie soll groß genug sein, um eine möglichst hohe maximale Farbdichte zu erzielen, d.h., um eine möglichst vollständige Reduktion des Farbabspalters bewirken zu können. Andererseits soll sie auch nicht wesentlich höher sein als hierzu erforderlich, so daß das Reduktionsmittel an den belichteten Stellen durch die Entwicklung des belichteten Silberhalogenids möglichst vollständig verbraucht werden kann. Die im Einzelfall günstigsten Mengenverhältnisse zwischen Silberhalogenid, ED-Verbindung und Farbabspalter sind zweckmäßigerweise anhand von Routineversuchen zu ermitteln. Brauchbare Ergebnisse können beispielsweise erhalten werden, wenn die ED-Verbindung jeweils in der 0,5- bis 5-fachen molaren Menge, bezogen auf den Farbabspalter, vorliegt. Das geeignete Mengenverhältnis zwischen Silberhalogenid und zugeordnetem Farbabspalter liegt etwa im Bereich von 2-20 Mol Silberhalogenid pro Mol Farbabspalter.

Um positive Farbübertragsbilder zu erhalten, werden die nicht diffundierenden reduzierbaren Farbabspalter in Kombination mit negativ arbeitenden Silberhalogenidemulsionen verwendet. Hierfür kommen prinzipiell alle üblichen Negativemulsionen in Frage, soweit sie sich ausreichend rasch entwickeln lassen. Diese können als Silberhalogenid Silberchlorid und Silberbromid, gegebenenfalls mit einem Gehalt an Silberiodid bis zu 10 Mol-% enthalten. Geeignet sind beispielsweise Emulsionen, deren Silberhalogenid zur Hauptsache, z.B. zu mehr als 70 Mol-%, aus Silberchlorid besteht.

Zwischen verschiedenen Schichteinheiten sind zweckmäßigerweise Trennschichten vorhanden, die Verbindungen enthalten können, die mit diffundierenden Entwicklungsprodukten zu reagieren und deren Diffusion aus einer Schichteinheit in eine andere zu unterbinden vermögen. Dies trägt dazu bei, daß die Zuordnung jeweils auf eine Schichteinheit begrenzt bleibt. Derartige Verbindungen sind bekannt, hierfür eignen sich beispielsweise nicht diffundierende Hydrochinonderivate sowie beispielsweise die in der Publikation "Research Disclosure No. 17 842" (Februar 1979) beschriebenen "scavenger compounds". Nicht zuletzt können auch ED-Verbindungen diese Funktion übernehmen, wenn sie in eine Trennschicht zwischen verschiedenen Schichteinheiten eingelagert werden.

Die Wechselwirkung zwischen dem belichteten Silberhalogenid und der ED-Verbindung wird im allgemeinen durch die oxidierte Form des zur Anwendung gelagenden Silberhalogenidentwicklungsmittels bewerkstelligt. Letzteres wird bei der Entwicklung bildmäßig oxidiert und das Oxidationsprodukt ist seinerseits in der Lage, die ED-Verbindung zu oxidieren und damit der Reaktion mit dem Farbabspalter zu entziehen. Die Wechselwirkung zwischen der nicht oxidierten ED-Verbindung und dem Farbabspalter erfolgt direkt oder unter der Mitwirkung eines Elektronenübertragungsmittels.

Typische geeignete Elektronenübertragungsmittel sind beispielsweise Hydrochinonverbindungen, z.B. Hydrochinon, 2,5-Dichlorhydrochinon und 2-Chlorhydrochinon; Aminophenolverbindungen wie beispielsweise 2-Aminophenol, N-Methylaminophenol,3-Methyl-4-aminophenol sowie 3,5-Dibromaminophenol; Brenzkatechinverbindungen wie beispielsweise Brenzkatechin, 4-Cyclohexylbrenzkatechin, 3-Methoxybrenzkatechin und 4-(N-Octadecylamino)-brenzkatechin; Phenylendiaminverbindungen wie beispielsweise N,N-Diethyl-p-phenylendiamin, 3-Methyl-N,N-diethyl-p-phenylendiamin, 3-Methoxy-N-ethyl-N-hydroxyethyl-p-phenylendiamin, sowie N,N,N',N'-Tetramethyl-p-phenylendiamin.

Als Elektronenübertragungsmittel eignet sich vielfach auch eine für die Entwicklung verwendete 3-Pyrazolidonverbindung, nämlich beispielsweise:

1-Phenyl-3-pyrazolidon, 1-Phenyl-4,4-dimethyl-3-pyrazolidon, 4-Hydroxymethyl-4methyl-1-phenyl-3-pyrazolidon, 1-p-Tolyl-3-pyrazolidon, 1-Phenyl-4-methyl-3-pyrazolidon, 1-Phenyl-5-methyl-3-pyrazolidon, 1-Phenyl-4,4-bis-(hydroxymethyl)-3-pyrazolidon, 1,4-Dimethyl-3-pyrazolidon, 4-Methyl-3-pyrazolidon, 4,4-Dimethyl-3-pyrazolidon, 1-(3-Chlorphenyl)-4-methyl-3-pyrazolidon, 1-(4-Chlorphenyl)-4-methyl-3-pyrazolidon, 1-(3-Chlorphenyl)-3-py-

razolidon, 1-(4-Chlorphenyl)-3-pyrazolidon, 1-(4-Tolyl)-4-methyl-3-pyrazolidon, 1-(2-Tolyl)-4-methyl-3-pyrazolidon, 1-(4-Tolyl)-4-hydroxymethyl-4-methyl-3-pyrazolidon, 1-(3-Tolyl)-3-pyrazolidon, 1-(3-Tolyl)-4,4-dimethyl-3-pyrazolidon, 1-(2-Trifluorethyl)-4,4-dimethyl-3-pyrazolidon und 5-Methyl-3-pyrazolidon.

Auch läßt sich eine Kombination von verschiedenen Elektronenübertragungsmitteln verwenden, z.B. eine Kombination, wie sie in US-A 3 039 869 beschrieben ist.

Die Entwicklerverbindungen können in der Entwicklungsflüssigkeit zur Anwendung gebracht werden oder können, mindestens teilweise, in irgendeiner Schicht des fotografischen Aufzeichnungsmaterials untergebracht werden, z.B. in einer oder mehreren Silberhalogenidemulsionsschichten, Schichten, in denen die Farbabspalter untergebracht werden, Zwischenschichten oder Bildempfangsschichten.

Die im Einzelfalle optimale Elektronenübertragungsverbindung hängt natürlich ab von der im Einzelfalle verwendeten ED-Verbindung, den reduzierbaren Farbabspalter sowie den Entwicklungsbedingungen des verwendeten Aufzeichnungsmaterials.

Ein für die Herstellung von farbigen Diffusionsbildnern geeignetes erfindungsgemäßes fotografisches Aufzeichnungsmaterial kann neben dem lichtempfindlichen Element,

das auf einem transparenten oder opaken Schichtträger angeordnet ist, weitere Schichtelemente enthalten, wie beispielsweise eine opake lichtabsorbierende oder lichtreflektierende für wäßrig-alkalische Entwicklungschemikalien durchlässige Bindemittelschicht, eine durch diffusionsfähige Farbstoffe oder farbbildende Substanzen anfärbbare Bindemittelschicht (Bildempfangselement), so wie gegebenenfalls Schichten eines sogenannten Neutralisationssystems. Ein solches Neutralisationssystem umfaßt in bekannter Weise mindestens eine Säureschicht, die nach Abschluß der Entwicklung der Absenkung des pH-Wertes dient, sowie gegebenenfalls eine oder mehrere Verzögerungsschichten, die eine vorzeitige pH-Absenkung verhindern.

Die anfärbbare Schicht kann jede Art von Schichten sein, die unter den Bedingungen des Farbübertrags eine bildmäßige Verteilung von diffusionsfähigen Farbstoffen aufzunehmen und nach Trocknung festzuhalten vermögen. Im einfachsten Fall kommen hierfür saugfähige oder quellbare Materialien in Frage, z.B. bestimmte Papiersorten, textile Gewebe oder Schichten aus hydrophilen Bindemitteln, z.B. Gelatine. Vorzugsweise enthält die anfärbbare Schicht zusätzlich Farbstoffbeizmittel. Die anfärbbare Schicht kann auf dem gleichen Schichtträger wie das lichtempfindliche Element angeordnet sein oder, falls sie nicht Bestandteil des lichtempfindlichen Aufzeichnungsmaterial ist, auf einem separaten Schichtträger aufgeschichtet sein.

Die anfärbbare Schicht ist beispielsweise eine Schicht

aus einem Bindemittel, das Beizmittel für die Festlegung der aus den nicht-diffundierenden Farbabspaltern freigesetzten diffusionsfähigen Farbstoffe enthält. Als Beizmittel für anionische Farbstoffe dienen vorzugsweise langkettige quaternäre Ammonium- oder Phosphoniumverbindungen, z.B. solche, wie sie beschrieben sind in US-A 3 271 147 und US-A 3 271 148. Ferner können auch bestimmte Metallsalze und deren Hydroxide, die mit den sauren Farbstoffen schwerlösliche Verbindungen bilden, verwandt werden. Weiterhin sind hier auch polymere Beizmittel zu erwähnen, wie etwa solche, die in DE-A 2 315 304, DE-A 26 31 521 oder DE-A 29 41 818 beschrieben sind. Die Farbstoffbeizmittel sind in der Beizmittelschicht in einem der üblichen hydrophilen Bindemittel dispergiert, z.B. in Gelatine, Polyvinylpyrrolidon, ganz oder partiell hydrolysierten Celluloseestern. Selbstverständlich können auch manche Bindemittel als Beizmittel fungieren, z.B. Mischpolymerisate oder Polymerisatgemische von Vinylalkohol und N-Vinylpyrrolidon, wie beispielsweise beschrieben in der DE-B 1 130 284, ferner solche, die Polymerisate von stickstoffhaltigen quaternären Basen darstellen, z.B. Polymerisate von N-Methyl-2-vinylpyridin, wie beispielsweise beschrieben in US-A 2 484 430. Weitere brauchbare beizende Bindemittel sind beispielsweise Guanylhydrazonderivate von Alkylvinylketonpolymerisaten, wie beispielsweise beschrieben in der US-A 2 882 156, oder Guanylhydrazonderivate von Acylstyrolpolymerisaten, wie beispielsweise beschrieben in der DE-A 2 009 498. Im allgemeinen wird man jedoch den zuletzt genannten beizenden Bindemitteln andere Bindemittel, z.B. Gelatine, zusetzen.

Darüber hinaus kann die anfärbbare Schicht oder eine hierzu benachbarte Schicht Schwermetallionen, insbesondere Kupfer- oder Nickelionen enthalten, falls bei der Entwicklung durch Schwermetallionen komplexierbare diffusionsfähige Farbstoffe oder Farbstoffvorprodukt freigesetzt werden. Die Metallionen können in der Bildempfangsschicht in komplex gebundener Form vorliegen, z.B. gebunden an bestimmte Polymerisate wie etwa beschrieben in Research Disclosure 18 534 (Sept. 1979) oder in DE-A 30 02 287.

Anwendungsbeispiel

Auf einen transparenten Schichtträger aus Cellulosetriacetat wurden in folgender Reihenfolge eine Beizschicht, eine lichtreflektierende opake Schicht und eine lichtempfindliche Silberhalogenidemulsionsschicht aufgetragen:

Beizschicht

3,75 g eines Copolymerisates aus einem Teil Styrol und einem Teil Maleinsäureimid von N,N-Dimethyl-N-hexadecyl-N-$\omega$-aminopropyl-ammoniumbromid wurden in 15 ml Ethanol gelöst und diese Lösung wurde in 75 ml 5 %iger Gelatinelösung eingerührt und homogenisiert. Nach Zusatz von 2,6 ml 5 %iger Saponinlösung und 1 ml 2 %iger wäßriger Mucochlorsäurelösung wurde auf eine übliche Gießviskosität (ca. 11 mPa.s) eingestellt und die Lösung wurde bei 40°C im Tauchverfahren auf den Träger aufgetragen.

Lichtreflektierende Schicht

Eine Aufschlämmung aus 42 g $TiO_2$ in 20 ml Wasser wurde unter Zusatz von 5 ml 5 %iger wäßriger Lösung von Natriumdodecylbenzolsulfonat und 5 ml 5 %iger wäßriger Saponinlösung in 150 ml 8 %iger wäßriger Gelatinelösung dispergiert. Nach Zugabe von 1 ml 2 %iger Mucochlorsäurelösung wurde die Dispersion auf eine Viskosität von 13 mPa.s bei 40°C eingestellt und im Tauchverfahren auf die getrocknete Beizschicht aufgetragen.

Lichtempfindliche Schicht

1 mMol SR-Verbindung 2 und 1,5 mMol ED-Verbindung 6 wurden in
5 ml Essigsäureethylester gelöst und nach Zugabe von
2 ml Palmitinsäurediethylamid in
25 ml 5 %iger Gelatinelösung unter Zusatz von
5 ml 5 %iger wäßriger Lösung von Natriumdedecylbenzolsulfonat

in einem Homogenisator bei ca. 1000 U/min einemulgiert.

Das Emulgat wurde über ein Faltenfilter filtriert und mit 5 %iger Gelatinelösung auf 75 ml aufgefüllt.

Nach Zugabe von 1 ml 2 %iger Mucochlorsäurelösung wurde das Emulgat mit 32 g einer gießfertigen Silberbromidgelatineemulsion mit einem Anteil von 0,67 Mol-% AgI versetzt. Diese war hergestellt worden mit 74 g $AgNO_3$/kg Emulsion.

Das Silber/Gelatine-Verhältnis betrug 1:1,1. Die Mischungen wurden im Tauchverfahren mit einer Geschwindigkeit von 5 m/min bei ca. 40°C auf die lichtreflektierende Schicht aufgetragen. Verschiedene Proben wurden nach 24-stündigem Trocknen durch ein Graustufenfilter auf der Emulsionsseite belichtet und mit einer ca. 300 µm stark aufgetragenen Entwicklerpaste der nachfolgend beschriebenen Zusammensetzung bei 18°C entwickelt, 2 min in einer 5 %igen Essigsäurelösung gestoppt, danach kurz gewässert und getrocknet. Bei einer ersten Probe betrug die Entwicklungszeit 1 min, bei einer zweiten Probe 4 min.

Entwickler

In 800 ml Wasser wurden 20 g Carbethoxymethylcellulose unter Rühren gelöst. Zu der homogenen Lösung wurden 40 g NaOH fest, 1,5 g Ethylendiamintetraessigsäure-Natriumsalz, 11,5 g Borax, 1 g Natriumhexametaphosphat, 3 g KBr, 1,6 g 1-Phenyl-4-methyl-4-hydroxymethyl-pyrazolidon-3, 0,1 g 1-Phenyl-5-mercapto-1,2,3,4-tetrazol hinzugefügt. Die Lösung wurde nun mit Wasser auf 1000 ml aufgefüllt (pH 13,8). Durch Zugabe von je 5 ml Eisessig sinkt der pH-Wert jeweils um 0,1.

Mit beiden Proben wurden purpurfarbige positive Farbüberträge mit ausreichender Farbdichte und hoher Farbbrillanz erhalten. In gleicher Weise wurden auch mit anderen SR-Verbindungen gemäß der Erfindung Farbübertragsbilder hergestellt. Farbüberträge gleicher Farbdichte

wurden auch erhalten mit einem Testmaterial, das vor der Entwicklung in einem Heizschrank (3 d, 57°C, 5 % rel. Feuchte) oder Tropenschrank (7d, 35°C, 85 % rel. Feuchte) gelagert worden war.

Wenn anstelle der erfindungsgemäßen Farbabspalter solche der EP-A 0 035 685 verwendet werden, dann erhält man zwar nach vierminütiger Entwicklung Farbüberträge vergleichbarer Farbdichte, jedoch ist die nach einminütiger Entwicklung erzielte Farbdichte nur etwa halb so groß wie diejenige, die man nach vierminütiger Entwicklung erhält. Hinzu kommt, daß bei Verwendung der erfindungsgemäßen Farbabspalter für die Erreichung ausreichender Farbdichten eine geringere Menge an ED-Verbindungen erforderlich ist, verglichen mit Farbabspaltern gemäß EP-A 0 035 685.

Patentansprüche

1. Fotografisches Aufzeichnungsmaterial mit mindestens einer lichtempfindlichen Silberhalogenidemulsionsschicht und einer dieser zugeordneten nichtdiffundierenden Sulfiliminverbindung, die unter fotografischen Entwicklungsbedingungen durch Reduktion eine diffusionsfähige fotografisch aktive Verbindung in Freiheit zu setzen vermag, dadurch gekennzeichnet, daß die Sulfiliminverbindung der folgenden Formel I entspricht:

$$R^1-\underset{\oplus}{\overset{R^2}{\overset{|}{S}}}-\underset{\ominus}{N}-A-X \qquad \text{I}$$

worin bedeuten

$R^1$ und $R^2$ gleiche oder verschiedene Arylreste, von denen mindestens einer mindestens eine elektronenanziehende Gruppe in o- oder p-Stellung enthält und von denen mindestens einer eine Ballastgruppe enthält;

A ein Bindeglied zwischen N und X, bestehend aus einem Benzolring, der mit der 1-Stellung direkt an N gebunden ist, einer elektronenanziehenden Gruppe in 2-Stellung des Benzolringes und mindestens einer weiteren elektronenanziehenden Gruppe in 4- oder 6-Stellung des Benzolringes; und

X einen integrierenden Rest, der aus der Sulfiliminverbindung zusammen mit A und N als diffusionsfähige fotografisch aktive Verbindung der Formel $H_2N-A-X$ in Freiheit gesetzt wird.

2. Aufzeichnungsmaterial nach Anspruch 1, dadurch gekennzeichnet, daß die Sulfiliminverbindung der folgenden Formel II entspricht

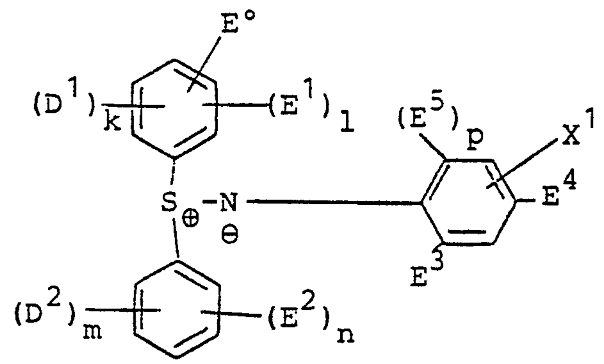

II

worin bedeuten

| | |
|---|---|
| $E°$, $E^1$, $E^2$ | elektronenanziehende Gruppen in o- oder p-Stellung, |
| $D^1$, $D^2$ | Ballastgruppen, |
| k,l,m,n,p | jeweils 0 oder 1 mit der Maßgabe, daß $k + m \geq 1$ |
| $E^3$,$E^4$,$E^5$ | elektronenanziehende Gruppen, |
| $X^1$ | einen integrierenden Rest einer fotografisch aktiven Verbindung, der entweder direkt an den Benzolring gebunden ist oder als Substituent entweder in $E^4$ oder in $E^5$ enthalten ist und der aus der Sulfil- |

iminverbindung zusammen mit N und dem Benzolring als diffusionsfähige fotografisch aktive Verbindung der Formel

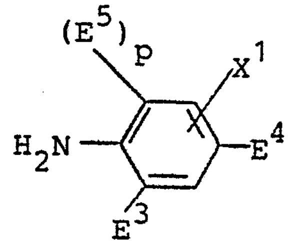

in Freiheit gesetzt wird.

3. Aufzeichnungsmaterial nach Anspruch 1, dadurch gekennzeichnet, daß als Sulfiliminverbindung ein Farbabspalter der folgenden Formel III verwendet wird

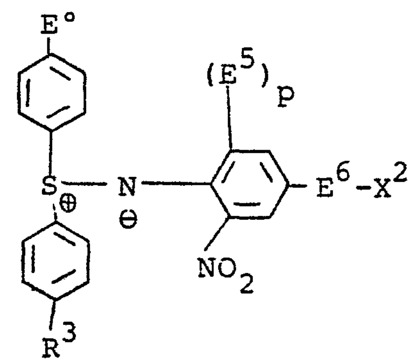

III

worin bedeuten

E° -$NO_2$, Alkylsulfonyl oder Sulfamoyl,

$R^3$ Wasserstoff, Halogen, Alkyl, Alkoxy, Acylamino, Carbamoyl oder Sulfamoyl, wobei mindestens einer der Reste E° und $R^3$ einen Ballastrest enthält,

$E^5$ -$NO_2$, -$CF_3$, -CN, Alkylsulfonyl, Sulfamoyl, Carbalkoxy oder Carbamoyl,

$E^6$ $-CO-(R^4)_q-$ oder $-SO_2-(R^4)_q-$,
$R^4$ Alkylen mit bis zu 4 C-Atomen,
p, q 0 oder 1,
$X^2$ einen Rest eines Farbstoffes oder Farbstoffvorproduktes.

4. Aufzeichnungsmaterial nach Anspruch 1, dadurch gekennzeichnet, daß die Silberhalogenidemulsionsschicht eine negativ arbeitende Silberhalogenidemulsion enthält und daß in wirksamen Kontakt mit der nichtdiffundierenden Sulfiliminverbindung eine Elektronendonor-Verbindung oder Elektronendonor-Vorläuferverbindung enthalten ist.

5. Aufzeichnungsmaterial nach Anspruch 4, dadurch gekennzeichnet, daß als Elektronendonor-Vorläuferverbindung ein Benzofuranon-Derivat der folgenden allgemeinen Formel enthalten ist:

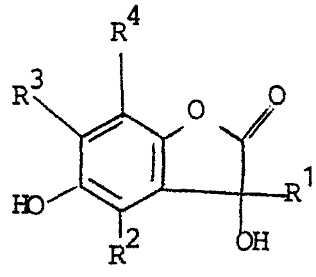

worin bedeuten:

$R^1$ einen carbocyclischen oder heterocyclischen aromatischen Rest;
$R^2, R^3, R^4$ gleiche oder verschiedene Substituenten, und zwar Wasserstoff, Alkyl, Alkenyl, Aryl, Alkoxy, Alkylthio, Amino oder $R^3$ und $R^4$ vervollständigen zusammen einen ankonden-

sierten carbocyclischen Ring, und wobei mindestens einer der Substituenten $R^1$, $R^2$, $R^3$ und $R^4$ einen die Diffusion erschwerenden Ballastrest mit 10 bis 22 C-Atomen enthält.

6. Aufzeichnungsmaterial nach Anspruch 1, dadurch gekennzeichnet, daß es als integrale Colorsofortbild-Einheit aufgebaut ist und in folgender Reihenfolge mindestens enthält:

a) ein lichtempfindliches Element mit mindestens einer lichtempfindlichen negativen Silberhalogenidemulsionsschicht und einer dieser zugeordneten nicht-diffundierenden reduzierbaren farbgebenden Sulfiliminverbindung:

b) eine alkalidurchlässige lichtreflektierende Schicht und

c) eine Bildempfangsschicht.

7. Verbindung der folgenden Formel

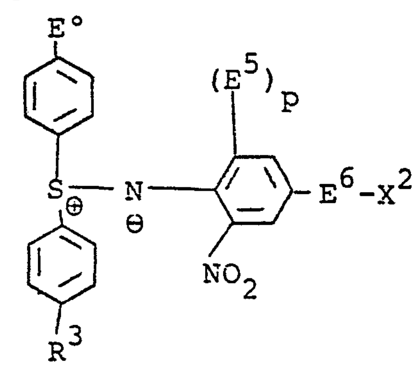

III

worin bedeuten:

$E^{\circ}$ -$NO_2$, Alkylsulfonyl oder Sulfamoyl,

$R^3$ Wasserstoff, Halogen, Alkyl, Alkoxy, Acylamino, Carbamoyl oderSulfamoyl, wobei mindestens einer der Reste $E^{\circ}$ und $R^3$ einen Ballastrest enthält,

$E^5$ -$NO_2$, -$CF_3$, -CN, Alkylsulfonyl, Sulfamoyl, Carbalkoxy oder Carbamoyl,

$E^6$ $-CO-(R^4)_q-$ oder $-SO_2-(R^4)_q$,

$R^4$ Alkylen mit bis zu 4 C-Atomen,

p,q 0 oder 1,

$X^2$ einen Rest eines Farbstoffes oder Farbstoffvorproduktes.